# EUROPÄISCHE PATENTSCHRIFT

(11) **EP 1 840 437 B1**
(45) Veröffentlichungstag und Bekanntmachung des Hinweises auf die Patenterteilung: **05.03.2014**
(21) Anmeldenummer: 07000564.0
(22) Anmeldetag: 12.01.2007
(51) Int. Cl.: F16L 21/02, F16J 15/06

(54) **Dichtungsanordnung für eine hydraulische Steckverbindung**
Sealing arrangement for hydraulic plug in connection
Dispositif d'étanchéité pour un raccord rapide

(30) Priorität: 31.03.2006 DE 102006015555
(43) Veröffentlichungstag der Anmeldung: 03.10.2007
(73) Patentinhaber: FTE automotive GmbH, 96106 Ebern (DE)
(72) Erfinder: Elflein, Stephen, 96187 Rentweinsdorf (DE); Vogel, Albert, 97437 Haßfurt (DE)
(74) Vertreter: Oppermann, Mark

(56) Entgegenhaltungen:
- DE-A1- 19 848 213
- DE-C1- 19 714 801
- FR-A- 1 214 302
- GB-A- 1 097 592

## Beschreibung

### TECHNISCHES GEBIET

Die Erfindung bezieht sich auf eine Dichtungsanordnung für eine hydraulische Steckverbindung gemäß dem Oberbegriff des Patentanspruchs 1, insbesondere zur Anwendung in der Kraftfahrzeugtechnik für hydraulische Kupplungs- und Bremsanlagen.

### STAND DER TECHNIK

Bei einer bekannten Dichtungsanordnung (DE-A-197 14 801) der im Oberbegriff des Patentanspruchs 1 angegebenen Ausbildung besitzt das Dichtelement an seiner Innenumfangsfläche ein Formprofil, welches dem formschlüssigen Eingriff mit einem an der Außenumfangsfläche der Hülse ausgebildeten Formprofil dient, um das Dichtelement an der Hülse zu befestigen. Bei der Montage des Dichtelements durch axiales Aufschieben auf das zugeordnete Ende der Hülse erfolgt eine partielle elastische Aufweitung des Dichtelements, um die beiden Formprofile zum formschlüssigen Eingriff zu bringen. Durch diese Vormontage der Steckarmatur soll das Dichtelement unverlierbar an der Hülse befestigt werden.

Nach der Befestigung der Steckarmatur an der Hydraulikleitung wird die Steckverbindung durch Einstecken der Steckarmatur zusammen mit der daran befestigten Hydraulikleitung in die Kupplung hergestellt. Mit diesem Montageschritt erfolgt eine Anpressung des Dichtelements an die zugeordnete Innenumfangsfläche der Kupplung, wodurch der formschlüssige Eingriff der beiden Formprofile durch äußere Abstützung an der Innenumfangsfläche der Kupplung gesichert ist. Die Steckarmatur kann durch axiale Einwirkung einer hinreichenden Ausziehkraft aus der Kupplung herausgezogen werden, um die Steckverbindung zu lösen. Insbesondere bei unsachgemäßer Handhabung ist jedoch nicht auszuschließen, daß dabei die Hülse von dem Dichtelement getrennt wird.

Bei einer anderen bekannten Dichtungsanordnung (DE-A-198 48 213) wird die formschlüssige Verbindung von Hülse und Dichtelement durch einen radial nach innen weisenden Bund der Hülse, der eine radial nach innen gerichtete Ringnut bildet, und eine radial nach außen verlaufende Anformung des Dichtelements, welche in die Ringnut eingreift, herbeigeführt. Diese formschlüssige Verbindung erfährt somit durch die in die Steckarmatur eingeschobene Hydraulikleitung eine innere Abstützung, um der Möglichkeit des Lösens des Dichtelements von der Hülse beim Ausziehen der Steckarmatur aus der Kupplung entgegenzuwirken. Allerdings ist die Vormontage des Dichtelements an der Hülse schwierig, weil dabei die radial nach außen weisende ringförmige Anformung des Dichtelements durch die im Durchmesser wesentlich kleinere Öffnung des Bunds hindurchzuzwängen ist. Außerdem ist die radial nach außen weisende ringförmige Anformung des Dichtelements mit dem Hauptteil des Dichtelements nur durch eine dünne stegförmige Anbindung verbunden. Diese stegförmige Anbindung kann beim axialen Ausziehen der Steckarmatur aus der Kupplung infolge der Abdichtkraft, welche das Hauptteil des Dichtelements sowohl auf die Kupplung als auch auf die Hydraulikleitung ausübt, reißen, wodurch das beschädigte Hauptteil des Dichtelements in der Kupplung verbleibt.

### DARSTELLUNG DER ERFINDUNG

Der Erfindung liegt die Aufgabe zugrunde, eine Dichtungsanordnung bereitzustellen, welche die Vormontage des Dichtelements an der Hülse der Steckarmatur erleichtert und eine Trennung des Dichtelements von der Hülse oder eine Zerstörung des Dichtelements beim Lösen der Steckverbindung mit Sicherheit ausschließt.

Diese Aufgabe wird ausgehend von den Merkmalen des Oberbegriffs durch die kennzeichnenden Merkmale des Patentanspruchs 1 gelöst. Vorteilhafte und/oder zweckmäßige Weiterbildungen der Erfindung gehen aus den Patentansprüchen 2 bis 5 hervor und sind nachfolgend ebenfalls näher beschrieben.

Erfindungsgemäß ist bei einer Dichtungsanordnung für eine hydraulische Steckverbindung, die eine Kupplung und eine damit verbindbare Steckarmatur umfaßt, welche an einer Hydraulikleitung befestigt ist und eine Hülse sowie ein elastisches Dichtelement aufweist, das die Steckverbindung im montierten Zustand nach außen abdichtet, wobei die Hülse und das Dichtelement komplementäre Formprofile für den formschlüssigen Eingriff zur Befestigung des Dichtelements an der Hülse aufweisen, und wobei an der Außenumfangsfläche des Dichtelements mindestens eine Außendichtlippe ausgebildet ist, die im montierten Zustand der Steckverbindung an einer Innenumfangsfläche der Kupplung unter elastischer Verformung anliegt; das Formprofil der Hülse eine axial hinterschnittene Querausnehmung, die ausgehend von der Umfangsfläche der Hülse quer zur Achse der Hülse durch die Hülse durchgehend ist, wobei das Formprofil des Dichtelements ein daran angeformter Befestigungskörper ist, der quer zur Achse der Hülse in die Querausnehmung einführbar ist.

Nach dem Grundgedanken der Erfindung wird das Dichtelement nicht wie bei den beiden Dichtungsanordnungen gemäß dem Eingangs angegebenen Stand der Technik in axialer Richtung mit der Hülse vereinigt, sondern die komplementären Formprofile von Dichtelement und Hülse gelangen durch seitliches Einschieben quer zur Achse der Hülse zum formschlüssigen Eingriff. Aufgrund dieser Ausbildung kann das Dichtelement beim Ausziehen der Steckarmatur aus der Kupplung nicht von der Hülse abgezogen und getrennt werden. Auch Beschädigungen des Dichtelements beim Ausziehen der Steckarmatur aus der Kupplung sind ausgeschlossen. Außerdem sind bei der Vereinigung des Dichtelements mit der Hülse nur vergleichsweise geringe elastische Verformungen des Dichtelements erforderlich, um das Dichtelement unverlierbar an der Hülse zu befestigen.

Vorzugsweise ist die Querausnehmung der Hülse, die an ihrem dichtelementseitigen Ende hohlzylindrisch ist und mit einer senkrecht zur Achse der Hülse angeordneten ringförmigen Stirnfläche endet, aus einem äußeren und einem inneren Ausnehmungsabschnitt gebildet, von denen der äußere Ausnehmungsabschnitt ein diametral durch die Hülse verlaufender und von der ringförmigen Stirnfläche ausgehender Längsschlitz ist, dessen Wandflächen zueinander und zur Achse der Hülse parallel verlaufen, während der innere Ausnehmungsabschnitt ein parallel zur ringförmigen Stirnfläche durch die Hülse verlaufender Querschlitz ist, dessen Querabmessung größer ist als der Abstand zwischen den Wandflächen des Längsschlitzes, so daß die Querausnehmung in der Hülse im wesentlichen eine T-Struktur hat. Hierbei kann der Befestigungskörper des Dichtelements in Formgebung und Abmessungen dem äußeren und dem inneren Ausnehmungsabschnitt der Querausnehmung der Hülse entsprechend ausgebildet sein. Auf diese Weise sind quer zur Ausziehrichtung der Steckarmatur gerichtete hinterschnittene Flächen beträchtlicher Flächengröße erzielbar, welche das Dichtelement durch den komplementär ausgebildeten Befestigungskörper auch gegen hohe axial einwirkende Ausziehkräfte sicher an der Hülse festhalten. Bei dieser Ausbildung von Hülse und Dichtelement kann die Steckarmatur ohne Trennung des Dichtelements von der Hülse und ohne Beschädigungsgefahr für das Dichtelement und auch ohne Beeinträchtigung der Abdichtwirkung häufig aus der Kupplung herausgezogen und damit wieder verbunden werden.

Die Querausnehmung in der Hülse und der damit komplementär ausgeführte Befestigungskörper des Dichtelements können auch beispielsweise L-förmig strukturiert sein. Wesentlich ist jedoch, daß ausreichend große Hinterschnittflächen in der Querausnehmung der Hülse bereitgestellt werden, denen sich entsprechende Flächen des Befestigungskörpers des Dichtelements anlegen.

Im weiteren Verfolg des Erfindungsgedankens kann der innere Durchmesser der ringförmigen durch den äußeren Ausnehmungsabschnitt an diametral gegenüberliegenden Stellen unterbrochenen Stirnfläche der Hülse größer sein als der dem Außendurchmesser der Hydraulikleitung entsprechende Innendurchmesser der Hülse, wobei zwischen jeweils zwei Wandflächen des äußeren Ausnehmungsabschnitts zwei gegenüberliegende konkave Zylinderwandabschnittsflächen konzentrisch zur Achse der Hülse gebildet sind, denen das montierte Dichtelement mit entsprechenden konvexen Zylinderwandabschnittsflächen seines Befestigungskörpers anliegt, wobei zwischen den konvexen Zylinderwandabschnittsflächen des Dichtelements und der Innenumfangsfläche des Dichtelements zwei gegenüberliegende dünnwandige Wandabschnitte gebildet sind, die bei der Einführung des Befestigungskörpers des Dichtelements in die hinterschnittene Querausnehmung elastisch verformbar sind, wodurch das Dichtelement an der Hülse befestigt ist. Bei dieser Ausbildung der Hülse und des Dichtelements werden somit zwei am Befestigungskörper des Dichtelements vorgesehene dünnwandige nach außen konvex geformte Wandabschnitte gebildet, die bei der Montage des Dichtelements an der Hülse elastisch verformt werden und sich bei vollständiger Quereinführung des Befestigungskörpers des Dichtelements in die Hülse entsprechend konkav geformten Wandabschnittsflächen der Hülse anlegen und damit dazu beitragen, das Dichtelement auch in Querrichtung unverlierbar an der Hülse zu befestigen.

Schließlich kann bei der Montage des Dichtelements an der Hülse das Dichtelement zunächst an zwei gegenüberliegenden Wandflächen des äußeren Ausnehmungsabschnitts der Hülse mit entsprechenden Wandflächen seines Befestigungskörpers geführt sein, bevor die dünnwandigen Wandabschnitte zwischen zwei parallelen Wandflächen des äußeren Ausnehmungsabschnitts der Hülse elastischer Verformung ausgesetzt sind. Durch die besondere Ausbildung des äußeren Ausnehmungsabschnitts als Längsschlitz entstehen also Führungsflächen an der Hülse, welche in Verbindung mit entsprechenden Flächen am Befestigungskörpers des Dichtelements die Quereinführung des Dichtelements erleichtern und eine automatische Montage begünstigen.

### KURZE BESCHREIBUNG DER ZEICHNUNGEN

Weitere Einzelheiten der Erfindung werden nachfolgend anhand der ein Ausführungsbeispiel darstellenden Zeichnungen näher erläutert. Darin zeigt:
- Fig. 1: eine Längsschnittansicht einer montierten Steckverbindung, die eine Kupplung und eine an einem Hydraulikrohr befestigte Steckarmatur mit einem bevorzugten Ausführungsbeispiel der erfindungsgemäßen Dichtungsanordnung der Hülse und des Dichtelements umfaßt,
- Fig. 2: eine Perspektivansicht der in Fig. 1 dargestellten montierten Steckarmatur,
- Fig. 3: eine Perspektivansicht der Hülse,
- Fig. 4: eine Perspektivansicht des elastischen Dichtelements,
- Fig. 5: eine Perspektivansicht des abgebrochen dargestellten Hydraulikrohrs, an welchem die Steckarmatur zu befestigen ist,
- Fig. 6: eine der Fig. 2 entsprechende Perspektivansicht der Steckarmatur, jedoch in einer Längsschnittdarstellung,
- Fig. 7: eine der Fig. 3 entsprechende Perspektivansicht der Hülse, jedoch in einer Längsschnittdarstellung,
- Fig. 8: eine der Fig. 4 entsprechende Perspektivansicht des Dichtelements, jedoch in einer Längsschnittdarstellung,
- Fig. 9: eine der Fig. 5 entsprechende Perspektivansicht des Hydraulikrohrs, jedoch in Längsschnittdarstellung,
- Fig. 10: eine Seitenansicht der Hülse,
- Fig. 11: die Vorderansicht der Hülse,
- Fig. 12: die Rückansicht der Hülse,
- Fig. 13: den Längsschnitt durch die Hülse entsprechend der Schnittverlaufslinie XIII-XIII in Fig. 10,
- Fig. 14: eine Seitenansicht des Dichtelements,
- Fig. 15: die Vorderansicht des Dichtelements,
- Fig. 16: die Rückansicht des Dichtelements,
- Fig. 17: den Längsschnitt durch das Dichtelement entlang der Schnittverlaufslinie XVII-XVII in Fig. 14, und
- Fig. 18: den Längsschnitt durch das Dichtelement entlang der Schnittverlaufslinie XVIII-XVIII in Fig. 16.

### DETAILLIERTE BESCHREIBUNG DES AUSFÜHRUNGSBEISPIELS

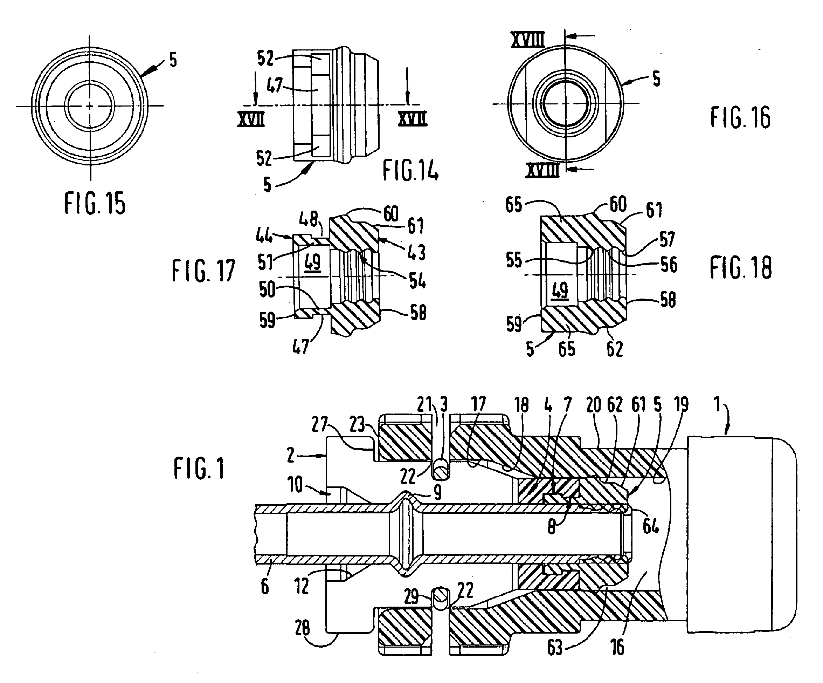

Die in Fig. 1 dargestellte hydraulische Steckverbindung besteht aus einer Kupplung 1 und einer damit verbundenen Steckarmatur 2, die mittels eines Sicherungselements 3 aus Federstahldraht in einer Hülse 4 lösbar befestigt ist. Die Kupplung 1 kann der Anschlußstutzen an einem Hydraulikaggregat, beispielsweise einem Zylindergehäuse, sein oder eine zwei Hydraulikleitungen verbindende Kupplungsmuffe.

Die Steckarmatur 2 weist ein elastisches Dichtelement 5 zur Abdichtung der Steckverbindung nach außen und die Hülse 4 auf, die an einem Hydraulikrohr 6 einer Hydraulikleitung befestigt ist. An dem Dichtelement 5 ist ein noch näher zu beschreibendes Formprofil 7 ausgebildet, das dem formschlüssigen Eingriff mit einem an der Hülse 4 ausgebildeten, komplementären und ebenfalls noch zu beschreibenden Formprofil 8 dient, um das Dichtelement 4 unverlierbar an der Hülse 4 zu befestigen.

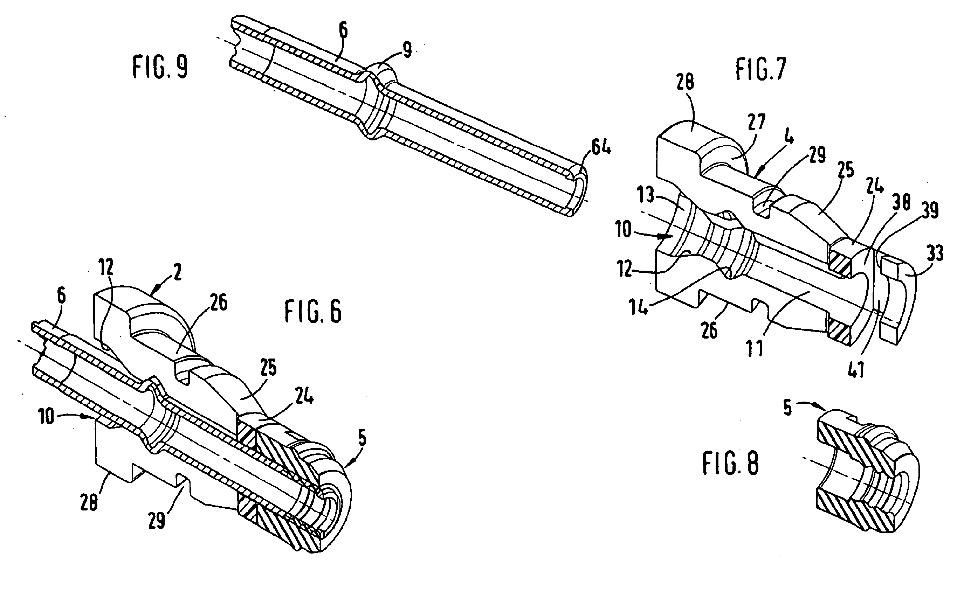

Wie aus den Fig. 1, 5, 6 und 9 hervorgeht ist an dem Hydraulikrohr 6 eine Bördelung 9 angestaucht, die der axialen Fixierung der Hülse 4 auf dem Hydraulikrohr 6 dient. Das Hydraulikrohr 6 weist im übrigen einen gleichbleibenden Außendurchmesser auf und erstreckt sich über die Hülse 4 hinaus durch das Dichtelement 5 und steht in axialer Richtung etwas über das Dichtelement 5 vor, wie insbesondere die Fig. 1 und 6 veranschaulichen.

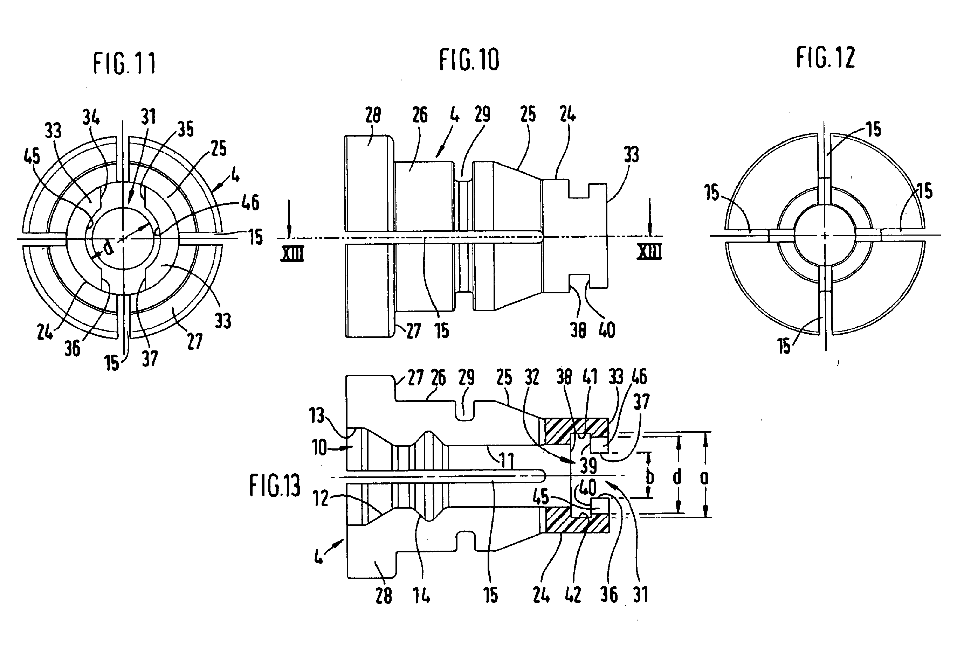

Die im wesentlichen hohlzylindrische Hülse 4, zu deren Beschreibung auf die Fig. 10 bis 13 Bezug genommen wird, besteht vorzugsweise aus einem geeigneten Kunststoff und kann daher mit hoher Maßgenauigkeit sowie guter Oberflächenqualität als Spritzgießteil ohne die Notwendigkeit einer mechanischen Nachbearbeitung kostengünstig hergestellt werden. Metall kommt als Werkstoff für die Hülse 4 in Frage, wenn sie der Ausbildung einer Steckarmatur an einem Schlauchteil dient.

Die Hülse 4 weist einen Durchgangskanal 10 auf, der ausgehend vom dichtelementseitigen Ende der Hülse 4 aus einem ersten zylindrischen Abschnitt 11, der einen geringfügig größeren Durchmesser als das Hydraulikrohr 6 hat, einem sich daran anschließenden sich konisch erweiternden Übergangsabschnitt 12 und einem zweiten zylindrischen Abschnitt 13 besteht, der einen größeren Durchmesser als der erste zylindrische Abschnitt 11 aufweist.

Nahe dem konischen Übergangsabschnitt 12 des Durchgangskanals 10 ist dessen erster zylindrischer Abschnitt 11 mit einer Ringnut 14 versehen, die einen im wesentlichen dreieckigen Querschnitt aufweist und der formschlüssigen Aufnahme der an dem Hydraulikrohr 6 angestauchten Bördelung 9 dient. Die Hülse 4 besitzt weiterhin vier schmale Längsschlitze 15, die kreuzförmig angeordnet sind, von dem dem Dichtelement 5 abgewandten Ende der Hülse 4 ausgehen und eine begrenzte radiale Aufweitung der Hülse 4 ermöglichen, wenn die Hülse 4 an der Bördelung 9 des Hydraulikrohrs 6 angebracht wird.

Die in Fig. 1 dargestellte Kupplung 1 besteht ebenfalls aus Kunststoff und besitzt ein Sackloch 16, das ausgehend vom offenen Ende der Kupplung 1 drei Abschnitte umfaßt, nämlich einen ersten zylindrischen Abschnitt 17, einen konischen Übergangsabschnitt 18 und einen zweiten zylindrischen Abschnitt 19, der gegenüber dem ersten zylindrischen Abschnitt 17 einen kleineren Durchmesser aufweist.

Im Bereich des zweiten zylindrischen Abschnitts 19 besitzt die Kupplung 1 an ihrem Außenumfang eine ringförmige Aussparung 20, die der Befestigung der Kupplung 1 am Kraftfahrzeug dient. Weiterhin weist die Kupplung 1 im Bereich des ersten zylindrischen Abschnitts 17 an ihrem Außenumfang eine Nut 21 zur axialen Fixierung des Sicherungselements 3 und mehrere Umfangsschlitze 22 im Grund der Nut 21 auf, durch die sich die Schenkel des Sicherungselements 3 nach radial innen in das Sackloch 16 der Kupplung 1 erstrecken, um im montierten Zustand der Steckverbindung die Steckarmatur 2 in der Kupplung 1 axial zu fixieren. Die ringförmige Stirnfläche 23 am offenen Ende der Kupplung 1 dient als Anschlag für die Steckarmatur 2.

Wie insbesondere aus den Fig. 10 bis 13 hervorgeht beginnt der Außenumfang der Hülse 4 an ihrem dichtelementseitigen Ende mit einem ersten zylindrischen Abschnitt 24, an welchen sich ein konischer Übergangsabschnitt 25 anschließt, dem wiederum ein zweiter zylindrischer Abschnitt 26 größeren Außendurchmessers folgt. Der zweite zylindrische Abschnitt 26 ist von einer zur Hülsenachse senkrechten Ringschulter 27 eines endseitigen Ringbunds 28 begrenzt. Der Außendurchmesser des ersten zylindrischen Abschnitts 24 ist derart ausgeführt, daß er im wesentlichen spielfrei in dem zweiten zylindrischen Abschnitt 19 des Sacklochs 16 der Kupplung 1 aufgenommen werden kann, während der Außendurchmesser des zweiten zylindrischen Abschnitts 26 der Hülse 4 geringfügig kleiner ist als der Innendurchmesser des ersten zylindrischen Abschnitts 17 des Sacklochs 16 der Kupplung 1.

Der zweite zylindrische Abschnitt 26 am Außenumfang der Hülse 4 weist eine im Querschnitt im wesentlichen rechteckige Ringnut 29 auf, die zur Hülsenachse senkrechte Seitenflächen hat und deren Tiefe so bemessen ist, daß sie größer ist als der Radius des Federstahldrahts des am Außenumfang der Kupplung 1 angebrachten Sicherungselements 3, so daß die sich durch die Nut 21 und die Umfangsschlitze 22 der Kupplung 1 erstreckenden Schenkel des Sicherungselements 3 linienförmig an den Seitenflächen der Ringnut 29 zur Anlage gelangen können. Die Ringschulter 27 am Ringbund 28 der Hülse 4 dient als Anschlagfläche für die Stirnfläche 23 am offenen Ende der Kupplung 1, sofern eine axiale Relativbewegung zwischen Hülse 4 und Kupplung 1 nicht bereits durch den Eingriff des Sicherungselements 3 in die Ringnut 29 am Außenumfang der Hülse 4 begrenzt ist.

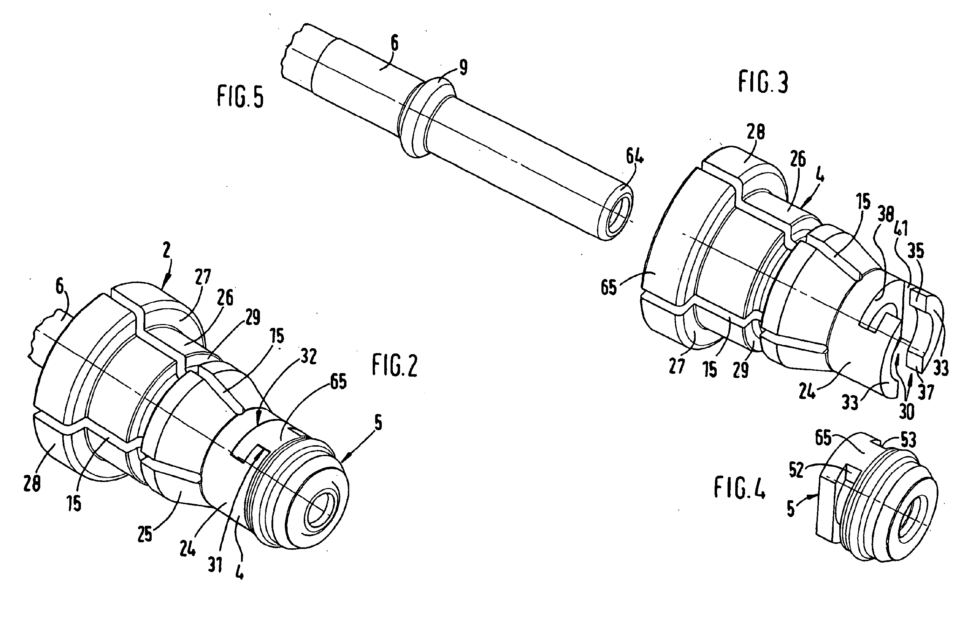

Das zur Befestigung und Führung des Dichtelements 5 dienende Formprofil 8 der Hülse 4 ist eine axial hinterschnittene Querausnehmung 30 (Fig. 3), die ausgehend von der Umfangsfläche des ersten zylindrischen Abschnitts 24 des Außenumfangs der Hülse 4 quer und im gezeigten Beispiel rechtwinklig zur Hülsenachse durch die Hülse 4 durchgehend ist. Die Querausnehmung 30, deren nach außen in Erscheinung tretende Ausbildung insbesondere aus den Fig. 3, 7, 10, 11 und 13 hervorgeht, ist aus einem äußeren Ausnehmungsabschnitt 31 und einem inneren Ausnehmungsabschnitt 32 gebildet. Der äußere Ausnehmungsabschnitt 31 ist ein diametral durch die im Bereich der Querausnehmung 30 hohlzylindrische Hülse 4 verlaufender und von einer ringförmigen Stirnfläche 33 am dichtelementseitigen Ende der Hülse 4 ausgehender Längsschlitz, dessen vier paarweise gegenüberliegende Wandflächen 34, 35, 36 und 37 zueinander und zur Achse der Hülse 4 parallel verlaufen. Die ringförmige Stirnfläche 33 der Hülse 4 ist senkrecht zur Hülsenachse gerichtet. Der innere Ausnehmungsabschnitt 32 ist ein parallel zu der ringförmigen Stirnfläche 33 durch die Hülse 4 verlaufender Querschlitz, der zusammen mit dem Längsschlitz des äußeren Ausnehmungsabschnitts 31 eine T-förmige Querausnehmung 30 bildet, wie das insbesondere aus den Fig. 2 und 3 deutlich wird.

Der querschlitzförmige innere Ausnehmungsabschnitt 32 der Hülse 4 wird von fünf Wandflächen 38, 39, 40, 41 und 42 begrenzt, von denen sich die Wandflächen 39 und 40 in einer Ebene befinden, wie am besten aus Fig. 13 ersichtlich ist. Die Wandflächen 39 und 40 bilden den axialen Hinterschnitt der Querausnehmung 30. Die Querabmessung a des inneren Ausnehmungsabschnitts 32 ist größer als der Abstand b zwischen den Wandflächenpaaren 34, 35 und 36, 37 des längsschlitzartigen äußeren Ausnehmungsabschnitts 31.

Das Formprofil 7 des Dichtelements 5 ist ein an den Hauptkörper 43 des Dichtelements 5 angeformter Befestigungskörper 44 (Fig. 17) der in Formgebung und Abmessungen dem äußeren und dem inneren Ausnehmungsabschnitt 31, 32 der Querausnehmung 30 der Hülse 4 entsprechend ausgebildet ist und quer zur Achse der Hülse 4 in die Querausnehmung 30 einführbar ist.

Wie insbesondere die Fig. 11 und 13 verdeutlichen ist der innere Durchmesser d der ringförmigen durch den äußeren Ausnehmungsabschnitt 31 an diametral gegenüberliegenden Stellen unterbrochenen Stirnfläche 33 der Hülse 4 größer als der dem Außendurchmesser der Hydraulikleitung 6 entsprechende Innendurchmesser im ersten zylindrischen Abschnitt 11 der Hülse 4. Dadurch sind zwischen jeweils zwei Wandflächen 35, 37 und 34, 36 des äußeren Ausnehmungsabschnitts 31 zwei gegenüberliegende konkave Zylinderwandabschnittsflächen 45 und 46 konzentrisch zur Achse der Hülse 4 gebildet. Das Dichtelement 5 besitzt an seinem Befestigungskörper 44 entsprechend konvexe Zylinderwandabschnittsflächen 47 und 48, die bei montiertem Dichtelement 5 den konkaven Zylinderwandabschnittsflächen 45 und 46 der Hülse 4 anliegen. Zwischen den konvexen Zylinderabschnittsflächen 47 und 48 des Befestigungskörpers 44 des Dichtelements 5 und der Innenumfangsfläche 49 des Dichtelements 5 sind zwei gegenüberliegende dünnwandige Wandabschnitte 50 und 51 gebildet, die bei der Einführung des Befestigungskörpers 44 des Dichtelements 5 in die hinterschnittene Querausnehmung 30 elastisch verformbar sind, wodurch das Dichtelement 5 unverlierbar an der Hülse 4 befestigt ist.

Bei der Montage des Dichtelements 5 an der Hülse 4 wird das Dichtelement 5 zunächst an zwei gegenüberliegenden Wandflächen 34, 35 oder 36, 37 (Fig. 11) des längsschlitzartigen äußeren Ausnehmungsabschnitts 31 mit entsprechenden Wandflächen 52, 53 (Fig. 4, 14) bei der Quereinführung geführt, bevor die dünnwandigen Wandabschnitte 50, 51 (Fig. 17) des Befestigungskörpers 44 zwischen zwei parallelen gegenüberliegenden Wandflächen 34, 35 oder 36, 37 des äußeren Ausnehmungsabschnitts 31 der Hülse 4 elastischer Verformung ausgesetzt sind. Dadurch wird die Vereinigung des Dichtelements 5 mit der Hülse 4 erleichtert und ist maschinell durchführbar.

Wie insbesondere aus den Fig. 1, 8, 17 und 18 hervorgeht, schließt sich an die Innenumfangsfläche 49 des Dichtelements 5, die etwa dem Außendurchmesser des Hydraulikrohrs 6 entspricht, ein im Innendurchmesser kleinerer, im Hauptkörper 43 des Dichtelements 5 befindlicher Dichtbereich 54 an, der drei axial voneinander beabstandete, jeweils konzentrische Innendichtlippen 55, 56, 57 (Fig. 18) aufweist, die ein im wesentlichen sinuswellenförmiges Dichtprofil mit drei Dichtkanten und zwei dazwischen angeordneten Profilgründen ausbilden. Der Dichtbereich 54 endet an dem von der Hülse 4 abgewandten Ende des Dichtelements 5 an einer Stirnfläche 58, die ebenso wie die hülsenseitige Stirnfläche 59 des Dichtelements 5 planeben ist und rechtwinklig zur Mittelachse des Dichtelements 5 steht.

An der Außenumfangsfläche des Dichtelements 5 befindet sich im Bereich seines Hauptkörpers 43 eine damit konzentrische Außendichtlippe 60, die ein den Innendichtlippen 55, 56, 57 entsprechendes Profil aufweist und im montierten Zustand der Steckverbindung an dem zweiten zylindrischen Abschnitt 19 des Sacklochs 16 der Kupplung 1 unter elastischer Verformung dichtend anliegt.

In Fig. 1 und 6 sind die Innendichtlippen 55, 56, 57 und die Außendichtlippe 60 zu ihrer Veranschaulichung im unverformten Zustand dargestellt, liegen jedoch unter elastischer Verformung flächig den ihnen gegenüberliegenden Zylinderflächen des Hydraulikrohrs 6 bzw. der Kupplung 1 an.

An die hülsenabgewandte Stirnfläche 58 des Dichtelements 5 schließt sich außen eine konische Fläche 61 an, welche die Einführung der Steckarmatur 2 in den zweiten zylindrischen Abschnitt 19 des Sacklochs 16 der Kupplung 1 erleichtert. An die konische Fläche 61 schließt sich ein zylindrischer Abschnitt 62 des Dichtelements 5 an, dessen Durchmesser kleiner ist als der Durchmesser des zweiten zylindrischen Abschnitts 19 des Sacklochs 16. Dadurch entsteht im montierten Zustand der Steckarmatur 2 ein Spaltraum 63, der in Fig. 1 dargestellt ist. In den Spaltraum 63 kann das unter Druck stehende Hydraulikmedium eindringen, um das Dichtelement 5 an das Hydraulikrohr 6 anzupressen.

Durch die beträchtlichen Abstände zwischen den Wandflächen 52, 53 am Befestigungskörper 44 des Dichtelements 5, die den Abständen zwischen den Wandflächenpaaren 34, 35 und 36, 37 der Hülse 4 entsprechen, ist der Hauptkörper 43 des Dichtelements 5 nicht nur über die dünnwandigen elastisch verformbaren Wandabschnitte 50, 51 mit den in dem inneren Ausnehmungsabschnitt 32 der Querausnehmung 30 der Hülse 4 im Hinterschnitt befindlichen großflächigen Abschnitten des Befestigungskörpers 44 verbunden, sondern hauptsächlich über zwei querschnittsgroße Stege 65 (Fig. 2, 4). Daher kann auch nach häufigem Herausziehen der Steckarmatur 2 aus der Kupplung 1 der Hauptkörper 43 des Dichtelements 5 nicht von dem im inneren Ausnehmungsabschnitt 32 verankerten Befestigungskörper 44 des Dichtelements 5 durch Abreißen getrennt werden. Die Hülse 4 und das daran auf die erfindungsgemäße Weise befestigte Dichtelement 5 bilden eine Steckarmatur 2, von der sich das Dichtelement 5 auch nicht unbeabsichtigt lösen kann.

Die Steckarmatur 2, bestehend aus der Hülse 4 und dem damit fest verbundenen Dichtelement 5, ist ein vormontiertes Halbzeug, das nach automatisierter Montage problemlos lagerbar ist, d.h. die Hülse 4 und das Dichtelement 5 behalten auch werkzeugfallend im Lager- bzw. Transportbehälter in der darin vorliegenden Haufenlage ihre definierte Einbaurelativlage unverändert bei.

Nachfolgend wird die Fertigung und die Montage der zuvor beschriebenen Steckverbindung beschrieben, wobei die Montage auch vollständig maschinell erfolgen kann.

Zunächst wird am abgelängten Hydraulikrohr 6 mit vorbestimmtem Abstand zum Rohrende die Bördelung 9 durch axiales Stauchen ausgebildet. Im gleichen Fertigungsschritt oder einem Folgeschritt wird am Rohrende eine Rundung 64 angestaucht.

Vor oder nach dieser Vorbereitung des Hydraulikrohrs 6 wird das Dichtelement 5, das in einer Vulkanisierform maßgenau gefertigt wurde, von der Seite her rechtwinklig zur Hülsenachse in die Querausnehmung 30 der mittels eines Spritzgießverfahrens maßgenau hergestellten Hülse 4 eingeführt. Dabei erfolgt eine temporäre partielle elastische Verformung des Dichtelements 5, wie schon zuvor beschrieben wurde.

Nun wird die Hülse 4 mit vormontiertem Dichtelement 5 an dem Hydraulikrohr 6 angebracht. Dazu wird die Hülse 4 mit ihrem Ringbund 28 über das Ende des Hydraulikrohrs 6 geschoben, bis die Bördelung 9 an dem konischen Übergangsabschnitt 12 des Durchgangskanals 10 zur Anlage gelangt. Hierbei ist das Ende des Hydraulikrohrs 6 mit der Rundung 64 bereits in das Dichtelement 5 eingedrungen. Bei Fortsetzung des Aufschiebvorgangs der Hülse 4 auf das Hydraulikrohr 6 drückt die am konischen Übergangsabschnitt 12 anliegende Bördelung 9 die aufgrund der Längsschlitze 15 radial aufweitbare Hülse 4 auseinander, bis die Bördelung 9 in die Ringnut 14 im Durchgangskanal 10 der Hülse 4 einrastet. Damit ist die Hülse 4 in axialer Richtung sicher auf dem Hydraulikrohr befestigt. Außerdem hat bei dem Aufschiebvorgang das Hydraulikrohr 6 mit seiner endseitigen Rundung 64 durch das Dichtelement 5 hindurchgeschoben, so daß die Bauteile der Steckverbindung die in Fig. 1 dargestellte Position einnehmen. Die Steckarmatur 2 kann jetzt in das Sackloch 16 der Kupplung 1 eingeführt und durch das Sicherungselement 3 axial gesichert werden. Die Steckverbindung ist damit betriebsbereit.

Die Dichtungsanordnung ist an einer hydraulischen Steckverbindung angebracht, die insbesondere zur Anwendung in der Kraftfahrzeughydraulik vorgesehen ist. Die Steckverbindung besteht aus einer Kupplung, einer damit verbindbaren Steckarmatur, die an einem Hydraulikrohr befestigt ist. Die Steckarmatur umfaßt eine Hülse und ein daran befestigtes Dichtelement, welches bei montierter Steckverbindung sowohl gegenüber dem Hydraulikrohr als auch nach außen gegenüber der Kupplung mit angeformten Dichtlippen abdichtet. Das Dichtelement und das Ende der Hülse, welches das Dichtelement aufnimmt, sind auf besondere Weise ausgebildet, um die Dichtungsanordnung leicht und insbesondere maschinell montieren zu können, ohne daß das Dichtelement beim Lösen der Steckverbindung von der Hülse axial getrennt werden kann. Hierfür ist vorgesehen, daß das Dichtelement von der Seite her in eine hinterschnittene Querausnehmung der Hülse eingeschoben wird und dort im Formschluß auch gegen hohe axiale Trennkräfte gehalten wird.

### BEZUGSZEICHENLISTE

- 1: Kupplung
- 2: Steckarmatur
- 3: Sicherungselement
- 4: Hülse
- 5: Dichtelement
- 6: Hydraulikrohr
- 7: Formprofil
- 8: Formprofil
- 9: Bördelung
- 10: Durchgangskanal
- 11: erster zylindrischer Abschnitt
- 12: Übergangsabschnitt
- 13: zweiter zylindrischer Abschnitt
- 14: Ringnut
- 15: Längsschlitz
- 16: Sackloch
- 17: erster zylindrischer Abschnitt
- 18: Übergangsabschnitt
- 19: zweiter zylindrischer Abschnitt
- 20: Aussparung
- 21: Nut
- 22: Umfangsschlitz
- 23: Stirnfläche
- 24: erster zylindrischer Abschnitt
- 25: Übergangsabschnitt
- 26: zweiter zylindrischer Abschnitt
- 27: Ringschulter
- 28: Ringbund
- 29: Ringnut
- 30: Querausnehmung
- 31: äußerer Ausnehmungsabschnitt
- 32: innerer Ausnehmungsabschnitt
- 33: Stirnfläche
- 34: Wandfläche
- 35: Wandfläche
- 36: Wandfläche
- 37: Wandfläche
- 38: Wandfläche
- 39: Wandfläche
- 40: Wandfläche
- 41: Wandfläche
- 42: Wandfläche
- 43: Hauptkörper
- 44: Befestigungskörper
- 45: Zylinderwandabschnittsfläche
- 46: Zylinderwandabschnittsfläche
- 47: Zylinderwandabschnittsfläche
- 48: Zylinderwandabschnittsfläche
- 49: Innenumfangsfläche
- 50: Wandabschnitt
- 51: Wandabschnitt
- 52: Wandfläche
- 53: Wandfläche
- 54: Dichtbereich
- 55: Innendichtlippe
- 56: Innendichtlippe
- 57: Innendichtlippe
- 58: Stirnfläche
- 59: Stirnfläche
- 60: Außendichtlippe
- 61: konische Fläche
- 62: zylindrischer Abschnitt
- 63: Spaltraum
- 64: Rundung
- 65: Steg

- a: Querabmessung von 32
- b: Abstand der Wandflächen 34, 35 / 36, 37
- d: innerer Durchmesser von 33

## Patentansprüche

1. Dichtungsanordnung für eine hydraulische Steckverbindung, die eine Kupplung (1) und eine damit verbindbare Steckarmatur (2) umfaßt, welche an einer Hydraulikleitung (6) befestigt ist und eine Hülse (4) sowie ein elastisches Dichtelement (5) aufweist, das die Steckverbindung im montierten Zustand nach außen abdichtet, wobei die Hülse (4) und das Dichtelement (5) komplementäre Formprofile (8, 7) für den formschlüssigen Eingriff zur Befestigung des Dichtelements (5) an der Hülse (4) aufweisen, und wobei an der Außenumfangsfläche des Dichtelements (5) mindestens eine Außendichtlippe (60) ausgebildet ist, die im montierten Zustand der Steckverbindung an einer Innenumfangsfläche der Kupplung (1) unter elastischer Verformung anliegt, **dadurch gekennzeichnet, daß** das Formprofil (8) der Hülse (4) eine axial hinterschnittene Querausnehmung (30) ist, die ausgehend von der Umfangsfläche der Hülse (4) quer zur Achse der Hülse (4) durch die Hülse (4) durchgehend ist, und daß das Formprofil (7) des Dichtelements (5) ein daran angeformter Befestigungskörper (44) ist, der quer zur Achse der Hülse (4) in die Querausnehmung (30) einführbar ist.

2. Dichtungsanordnung nach Anspruch 1, **dadurch gekennzeichnet, daß** die Querausnehmung (30) der an ihrem dichtelementseitigen Ende hohlzylindrischen und mit einer senkrecht zur Achse der Hülse (4) angeordneten ringförmigen Stirnfläche (33) endenden Hülse (4) aus einem äußeren und einem inneren Ausnehmungsabschnitt (31, 32) gebildet ist, von denen der äußere Ausnehmungsabschnitt (31) ein diametral durch die Hülse (4) verlaufender und von der ringförmigen Stirnfläche (33) ausgehender Längsschlitz ist, dessen Wandflächen (34, 35, 36, 37) zueinander und zur Achse der Hülse (4) parallel verlaufen, während der innere Ausnehmungsabschnitt (32) ein parallel zur ringförmigen Stirnfläche (33) durch die Hülse (4) verlaufender Querschlitz ist, dessen Querabmessung (a) größer ist als der Abstand (b) zwischen den Wandflächen (34, 35, 36, 37) des Längsschlitzes.

3. Dichtungsanordnung nach den Ansprüchen 1 und 2, **dadurch gekennzeichnet, daß** der Befestigungskörper (44) des Dichtelements (5) in Formgebung und Abmessungen dem äußeren und dem inneren Ausnehmungsabschnitt (31, 32) der Querausnehmung (30) der Hülse (4) entsprechend ausgebildet ist.

4. Dichtungsanordnung nach den Ansprüchen 1 bis 3, **dadurch gekennzeichnet, daß** der innere Durchmesser (d) der ringförmigen durch den äußeren Ausnehmungsabschnitt (31) an diametral gegenüberliegenden Stellen unterbrochenen Stirnfläche (33) der Hülse (4) größer ist als der dem Außendurchmesser der Hydraulikleitung (6) entsprechende Innendurchmesser der Hülse (4), wobei zwischen jeweils zwei Wandflächen (34, 36; 35, 37) des äußeren Ausnehmungsabschnitts (31) zwei gegenüberliegende konkave Zylinderwandabschnittsflächen (45, 46) konzentrisch zur Achse der Hülse (4) gebildet sind, denen das montierte Dichtelement (5) mit entsprechenden konvexen Zylinderwandabschnittsflächen (47, 48) seines Befestigungskörpers (44) anliegt, wobei zwischen den konvexen Zylinderwandabschnittsflächen (47, 48) des Dichtelements (5) und der Innenumfangsfläche (49) des Dichtelements (5) zwei gegenüberliegende dünnwandige Wandabschnitte (50, 51) gebildet sind, die bei der Einführung des Befestigungskörpers (44) des Dichtelements (5) in die hinterschnittene Querausnehmung (30) elastisch verformbar sind, wodurch das Dichtelement (5) an der Hülse (4) befestigt ist.

5. Dichtungsanordnung nach Anspruch 4, **dadurch gekennzeichnet, daß** bei der Montage des Dichtelements (5) an der Hülse (4) das Dichtelement (5) zunächst an zwei gegenüberliegenden Wandflächen (34, 35 oder 36, 37) des äußeren Ausnehmungsabschnitts (31) der Hülse (4) mit entsprechenden Wandflächen (52, 53) seines Befestigungskörpers (44) geführt ist, bevor die dünnwandigen Wandabschnitte (50, 51) zwischen zwei parallelen Wandflächen (34, 35 oder 36, 37) des äußeren Ausnehmungsabschnitts (31) der Hülse (4) elastischer Verformung ausgesetzt sind.

## Claims

1. Sealing arrangement for a hydraulic plug-in connection which comprises a socket (1) and a plug-in fitting (2) which can be connected thereto, said plug-in fitting being attached to a hydraulic line (6) and comprising a sleeve (4) and an elastic sealing element (5) which seals off the plug-in connection from the exterior in the assembled state, wherein the sleeve (4) and the sealing element (5) have complementary shaped profiles (8, 7) for form-fitting engagement in order to fix the sealing element (5) to the sleeve (4), and wherein at least one outer sealing lip (60) is formed on the outer peripheral surface of the sealing element (5), which outer sealing lip bears with elastic deformation against an inner peripheral surface of the socket (1) in the assembled state of the plug-in connection, **characterized in that** the shaped profile (8) of the sleeve (4) is an axially undercut transverse recess (30) which, starting from the peripheral surface of the sleeve (4), passes through the sleeve (4) in a direction transverse to the axis of the sleeve (4), and **in that** the shaped profile (7) of the sealing element (5) is a fixing body (44) integrally formed thereon, which can be inserted into the transverse recess (30) transversely to the axis of the sleeve (4).

2. Sealing arrangement according to claim 1, **characterized in that** the transverse recess (30) of the sleeve (4), which sleeve is hollow-cylindrical at its sealing-element-side end and ends with an annular end face (33) arranged perpendicular to the axis of the sleeve (4), is formed of an outer and an inner recess section (31, 32), of which the outer recess section (31) is a longitudinal slot which starts from the annular end face (33) and runs diametrically through the sleeve (4), the wall surfaces (34, 35, 36, 37) of this longitudinal slot running parallel to one another and to the axis of the sleeve (4), while the inner recess section (32) is a transverse slot which runs parallel to the annular end face (33) through the sleeve (4), the transverse dimension (a) of said transverse slot being larger than the distance (b) between the wall surfaces (34, 35, 36, 37) of the longitudinal slot.

3. Sealing arrangement according to claims 1 and 2, **characterized in that** the fixing body (44) of the sealing element (5) is designed in terms of its shape and dimensions such that it corresponds to the outer and inner recess sections (31, 32) of the transverse recess (30) of the sleeve (4).

4. Sealing arrangement according to claims 1 to 3, **characterized in that** the inner diameter (d) of the annular end face (33) of the sleeve (4), which end face is interrupted by the outer recess section (31) at diametrically opposite points, is larger than the inner diameter of the sleeve (4) which corresponds to the outer diameter of the hydraulic line (6), wherein two opposite concave cylindrical wall section surfaces (45, 46) are formed concentrically to the axis of the sleeve (4) between in each case two wall surfaces (34, 36; 35, 37) of the outer recess section (31), the installed sealing element (5) bearing against said concave cylindrical wall section surfaces with corresponding convex cylindrical wall section surfaces (47, 48) of its fixing body (44), wherein two opposite thin-walled wall sections (50, 51) are formed between the convex cylindrical wall section surfaces (47, 48) of the sealing element (5) and the inner peripheral surface (49) of the sealing element (5), said thin-walled wall sections being able to be elastically deformed upon insertion of the fixing body (44) of the sealing element (5) into the undercut transverse recess (30), as a result of which the sealing element (5) is fixed to the sleeve (4).

5. Sealing arrangement according to claim 4, **characterized in that**, during installation of the sealing element (5) on the sleeve (4), the sealing element (5) is firstly guided on two opposite wall surfaces (34, 35 or 36, 37) of the outer recess section (31) of the sleeve (4) with corresponding wall surfaces (52, 53) of its fixing body (44), before the thin-walled wall sections (50, 51) are subjected to elastic deformation between two parallel wall surfaces (34, 35 or 36, 37) of the outer recess section (31) of the sleeve (4).

## Revendications

1. Agencement d'étanchéité pour un raccord de liaison hydraulique à emmanchement comprenant un raccord de couplage (1) et un embout à emmancher (2) pouvant y être relié, qui est fixé à une conduite hydraulique (6) et présente une douille (4) ainsi qu'un élément d'étanchéité élastique (5) assurant l'étanchéité, à l'encontre de l'extérieur, du raccord de liaison à emmanchement dans l'état monté, agencement dans lequel la douille (4) et l'élément d'étanchéité (5) présentent des profils de forme (8, 7) complémentaires destinés à venir en prise réciproque par complémentarité de formes en vue de la fixation de l'élément d'étanchéité (5) à la douille (4),
et dans lequel sur la surface périphérique extérieure de l'élément d'étanchéité (5), est formée au moins une lèvre d'étanchéité extérieure (60), qui, dans l'état monté du raccord de liaison à emmanchement, s'applique contre une surface périphérique intérieure du raccord de couplage (1) en se déformant élastiquement,
**caractérisé en ce que** le profil de forme (8) de la douille (4) est un évidement transversal (30) à contre-dépouille axiale, qui, à partir de la surface périphérique de la douille (4), traverse de manière continue la douille (4) transversalement à l'axe de la douille (4), et **en ce que** le profil de forme (7) de l'élément d'étanchéité (5) est un corps de fixation (44) qui y est formé, et peut être inséré dans l'évidement transversal (30), transversalement à l'axe de la douille (4).

2. Agencement d'étanchéité selon la revendication 1, **caractérisé en ce que** l'évidement transversal (30) de la douille (4), qui, à son extrémité du côté de l'élément d'étanchéité, est cylindrique creuse et se termine par une surface frontale (33) de forme annulaire agencée perpendiculairement à l'axe de la douille (4), est formé par un tronçon d'évidement extérieur et un tronçon d'évidement intérieur (31, 32), dont le tronçon d'évidement extérieur (31) est une fente longitudinale, qui s'étend diamétralement à travers la douille (4) en étant issue de la surface frontale (33) de forme annulaire, les surfaces de paroi (34, 35, 36, 37) de cette fente s'étendant parallèlement les unes aux autres et à l'axe de la douille (4), tandis que le tronçon d'évidement intérieur (32) est une fente transversale s'étendant à travers la douille (4) parallèlement à la surface frontale (33) de forme annulaire, et dont la dimension transversale (a) est plus grande que la distance (b) entre les surfaces de paroi (34, 35, 36, 37) de la fente longitudinale.

3. Agencement d'étanchéité selon les revendications 1 et 2, **caractérisé en ce que** le corps de fixation (44) de l'élément d'étanchéité (5) est configuré, quant à la forme et aux dimensions, de manière correspondante au tronçon d'évidement extérieur et au tronçon d'évidement intérieur (31, 32) de l'évidement transversal (30) de la douille (4).

4. Agencement d'étanchéité selon les revendications 1 à 3, **caractérisé en ce que** le diamètre intérieur (d) de la surface frontale (33) de forme annulaire de la douille (4), interrompue par le tronçon d'évidement extérieur (31) en des endroits diamétralement opposés, est supérieur au diamètre intérieur de la douille (4) correspondant au diamètre extérieur de la conduite hydraulique (6), **en ce qu'**entre deux surfaces de paroi respectives (34, 36 ; 35, 37) du tronçon d'évidement extérieur (31), sont formées, concentriquement à l'axe de la douille (4), respectivement deux surfaces de tronçon de paroi cylindrique concaves (45, 46), contre lesquelles vient s'appuyer l'élément d'étanchéité (5) monté, avec des surfaces de tronçon de paroi cylindrique convexes (47, 48) correspondantes de son corps de fixation (44), et **en ce qu'**entre les surfaces de tronçon de paroi cylindrique convexes (47, 48) de l'élément d'étanchéité (5) et la surface périphérique intérieure (49) de l'élément d'étanchéité (5), sont formés deux tronçons de paroi (50, 51) minces, opposés, qui, lors de l'introduction du corps de fixation (44) de l'élément d'étanchéité (5) dans l'évidement transversal (30) à contre-dépouille, peuvent être déformés élastiquement en produisant ainsi la fixation de l'élément d'étanchéité (5) à la douille (4).

5. Agencement d'étanchéité selon la revendication 4, **caractérisé en ce que** lors du montage de l'élément d'étanchéité (5) sur la douille (4), l'élément d'étanchéité (5) est tout d'abord guidé sur deux surfaces de paroi opposées (34, 35 ou 36, 37) du tronçon d'évidement extérieur (31) de la douille (4), avec des surfaces de paroi (52, 53) correspondantes de son corps de fixation (44), avant que les tronçons de paroi minces (50, 51) soient soumis à une déformation élastique entre deux surfaces de paroi parallèles (34, 35 ou 36, 37) du tronçon d'évidement extérieur (31) de la douille (4).
